# EUROPÄISCHE PATENTANMELDUNG

(11) **EP 4 357 125 A1**
(43) Veröffentlichungstag der Anmeldung: **24.04.2024**
(21) Anmeldenummer: 23201679.0
(22) Anmeldetag: 04.10.2023
(51) Int. Cl.: B32B 5/18

(54) **ABRIEBFESTE RÜCKSTELLFÄHIGE FOLIE AUF BASIS VON THERMOPLASTISCHEN ELASTOMEREN**

(30) Priorität: 17.10.2022 DE 102022210960
(71) Anmelder: Benecke-Kaliko AG, 30419 Hannover (DE)
(72) Erfinder: Knecht, Matthias, 30165 Hannover (DE); Schlottke, Holger, 30165 Hannover (DE); Wittmann, Gabriele, 30165 Hannover (DE)
(74) Vertreter: Continental Corporation

(57) **Zusammenfassung**

Die vorliegende Erfindung betrifft eine Kunststofffolie oder ein mehrlagiges Folienlaminat mit einer Oberfolie und zumindest einer Unterfolie oder zumindest einem polymerbasierten Schaum, wobei die Kunststofffolie oder die Oberfolie des mehrlagigen Folienlaminats aus einem thermoplastischem Elastomer der Blockcopolymerfamilie gebildet ist. Entsprechende Kunststofffolien sind tiefziehfähig und weisen gegenüber bekannten Kunststofffolien auf Basis von elastischem Polyolefin verbesserte Rückstelleigenschaften auf, die für Sitzanwendungen gefordert werden. Die vorliegende Erfindung betrifft weiterhin Verfahren zur Herstellung entsprechender Kunststofffolien und mehrlagiger Folienlaminate, Bespannungen für Innenraumteile eines Fahrzeugs und die Verwendung einer aus einem thermoplastischem Elastomer der Blockcopolymerfamilie gebildeten Kunststofffolie zur Vermittlung eines verbesserten Rückstellverhaltens der Form und/oder zur Unterdrückung von Faltenbildung in einem Fahrzeugsitz.

## Beschreibung

Die vorliegende Erfindung betrifft eine Kunststofffolie oder ein mehrlagiges Folienlaminat mit einer Oberfolie und zumindest einer Unterfolie oder zumindest einem polymerbasierten Schaum, wobei die Kunststofffolie oder die Oberfolie des mehrlagigen Folienlaminats aus einem thermoplastischem Elastomer der Blockcopolymerfamilie gebildet ist. Die vorliegende Erfindung betrifft weiterhin Verfahren zur Herstellung entsprechender Kunststofffolien und mehrlagige Folienlaminate, Bespannungen für Innenraumteile eines Fahrzeugs und die Verwendung einer aus einem thermoplastischem Elastomer der Blockcopolymerfamilie gebildeten Kunststofffolie zur Vermittlung eines verbesserten Rückstellverhaltens der Form und/oder zur Unterdrückung von Faltenbildung in einem Fahrzeugsitz.

### Stand der Technik

Als Obermaterial für Sitzbezüge im Automobil werden heute in den meisten Fällen Leder, Kunstleder oder Stoffbezüge verwendet. Hierzu werden normalerweise Nähkleider von Hand gefertigt, welche dann als Überzug für den Sitzt genutzt werden. In der Regel sind die Sitze mit einem elastischen Schaummaterial unterfüttert, auf das der Sitzbezug aufgebracht wird. Bei diesen Schäumen handelt es sich meistens um Polyurethanschäume.

Kunstleder werden in der Regel als ebene Folien hergestellt, aus denen anschließend in vergleichsweise aufwändigen Arbeitsschritten (Stanzen, Vernähen und anschließendes Beziehen des Sitzes) bezogene Sitze hergestellt werden; diese können anschließend in ein Fahrzeug verbaut werden. Diese Verarbeitung erfordert allerdings relativ viel Handarbeit und ist mit entsprechenden Kosten verbunden. Ein zusätzlicher Nachteil von konventionellen Kunstledern besteht darin, dass in diesen die Dekorschicht normalerweise auf einen textilen Träger kaschiert wird, so dass ein solches Kunstleder in der Regel aus mindestens drei Schichten (Dekorschicht, Schaumschicht und Textil) aufgebaut ist. Die Notwendigkeit der Verwendung vieler unterschiedlicher Materialien macht sich in einer erhöhten Komplexität des Herstellungsprozesses und damit einhergehenden Kostennachteilen bemerkbar.

Bei der Herstellung von Kunstledern und Oberflächendekoren mit dreidimensionaler Oberflächenstruktur kann die Oberflächenfolie auch in ein Formteil mit dem Negativ der gewünschten Oberflächenstruktur eingelegt werden, auf die dann eine Schaumschicht appliziert wird (sh. z.B. DE 41 22412 A1). Dies auch als "Hinterschäumen" bekannte Verfahren ist allerdings mit dem Nachteil verbunden, dass Nähte zwischen Teilen der Oberflächenfolie vor dem Aufbringen des Schaums mit einer Folie versiegelt werden müssen, um ein Eindringen des Schaums in die Nähte und darüber auf die Oberfläche zu verhindern.

Andere Bauteile z.B. Instrumententafel oder auch Türbrüstungen sind oftmals mit Folien als Oberflächenmaterial kaschiert. Diese Folien werden häufig im negativen Tiefziehprozess (negativ vacuum forming) oder auch IMG (In mold grain) verarbeitet. Dies bedeutet, dass die Folie in eine Kavität tiefgezogen wird und gleichzeitig mit einer dekorativen Narbe versehen wird. Die meisten Folien dieser Art basieren auf Polyolefinen.

Zur Verarbeitung von Folien oder Folienlaminaten, bei denen die Oberflächenfolie durch Polyolefin-haltige Materialien gebildet wird, können diese vernetzt werden, um die Stabilität der Oberflächenfolie und einer darauf generierten Narbe oder die Oberflächenstruktur gegenüber einer deformierenden Verarbeitung, wie sie bei Tiefziehprozessen auftritt, zu verbessern. Ein Verfahren zu Herstellung von genarbten Folien ist z.B. in der EP 1 149 858 B2 beschrieben, bei dem eine Folie mit einer genarbten Polyolefinoberfolie zunächst mit Elektronenstrahlen vernetzt und anschießend in die gewünschte Form tiefgezogen wird.

Die EP 1 688 460 B1 beschreibt ein Verfahren zur Herstellung einer genarbten Folie oder eines genarbten mehrlagigen Folienlaminats mit einer Ober- und einer Unterfolie, wobei das die Deckschicht bildende Material Polyolefine und gegebenenfalls weitere Polymere und Additive (z.B. Vernetzer) enthält. Mit Hilfe von Elektronenstrahlen wird die Masse nach einem Prägeschritt zum Aufbringen einer Narbe aus einen Gelgehalt von 3 bis 15% eingestellt.

In der EP 2 263 857 A2 ist ein Verfahren beschrieben, bei dem ein Folienkörper für die Innenverkleidung von Kraftfahrzeugen aus einem Ausgangmaterial, das unvernetzte Polyolefine und unvernetzte lonomere enthält, hergestellt wird und anschließend zur Generierung der Nabe einem narbgebenden Negativ-Tiefziehverfahren unterzogen wird. Dabei wird die Folie in eine Bauteilform tiefgezogen, welche das gewünschte Narbbild als Negativ enthält.

Tiefgezogene oder im IMG Prozess genarbte Folien kommen bisher allerdings normalerweise nicht als Sitzbezug zum Einsatz. Grund hierfür ist das vergleichsweise unvorteilhafte "Rückstellverhalten" von Folien auf Basis von elastischem Polyolefin, dass zu einer verstärkten Faltenbildung führt, die auch nach dem Wegfall einer deformierenden Belastung im Material verbleiben. Bei Sitzapplikationen besteht die besondere Anforderung, dass ein für solche Applikationen verwendbares Obermaterial vergleichsweise weich und flexibel sein muss, damit dem Nutzer der gewohnte Eindruck eines hochwertigen Bezugsmaterials vermittelt wird. Das hierbei für Folien auf Basis von elastischem Polyolefin beobachtete unvorteilhafte Rückstellverhalten sorgt dafür, dass solche Kunstleder nur für die Herstellung von Sitzbezügen in Nutzfahrzeugen und Landwirtschaftsfahrzeugen verwendet werden, wo geringerer Anforderungen an das Sitzmaterial gestellt und eher einfachere Sitzgeometrien realisiert werden. Im PKW-Sektor bestehen hingegen deutlich höhere Anforderungen an Haptik, Optik und Oberflächenperformance im Sinne von vorteilhaften Abrieb- und Kratzfestigkeitseigenschaften und gewünschter Langlebigkeit.

Ersichtlich besteht aus dem vorstehend geschilderten Stand der Technik ein Bedarf für ein Kunstleder bzw. Oberflächendekormaterial, dass auch in Applikationen, die im Gebrauch starken Deformationsbelastungen ausgesetzt sind, verwendet werden kann, ohne dass die bei Folien auf Basis von elastischem Polyolefin beobachteten ungünstigen Deformationseigenschaften beobachtet werden. Zweckmäßig sollte ein solches Material z.B. in einem In-Mould Grain Prozess permanent deformierbar sein, um eine gewünschte dreidimensionale Struktur erzeugen zu können. Zudem sollte es möglichst einfach und mit minimalen Arbeitsschritten möglich sein, das Material mit einer Narbung oder Oberflächenstruktur zu versehen, wobei das so erhältliche Material aber möglichst konventionellen Kunstledern vergleichbare haptische und Performanceeigenschaften aufweisen muss.

Die vorliegende Erfindung befasst sich mit diesem Bedarf.

### Detaillierte Beschreibung der Erfindung

In den dieser Erfindung zugrundeliegenden Untersuchungen wurde überraschend gefunden, dass eine aus einem thermoplastischem Elastomer der Blockcopolymerfamilie gebildete Kunststofffolie einerseits in einem einfachen und kostengünstigen Verfahren hergestellt werden kann, und andererseits, ggf. nach partielle Vernetzung über ein negatives Tiefziehverfahren verarbeitet werden kann, wobei sich das resultierende Produkt durch für ein Sitzmaterial gewünschte Eigenschaften, wie niedrigen Abrieb, hohe Kratzfestigkeit und Langlebigkeit auszeichnet. Die aus dem bezeichneten thermoplastischem Elastomer gebildeten Kunststofffolien zeigen insbesondere im Vergleich zu entsprechenden Kunststofffolien auf Basis von thermoplastischen Elastomeren auf Olefinbasis (im weiteren auch "Polyolefinkautschuk") auch ein deutlich günstigeres Rückstellverhalten (Hysterese) und vermeiden so eine unerwünschte und optisch nachteilhafte Faltenbildung in mit der Kunststofffolie bezogenen Sitzen.

Demzufolge betrifft die vorliegende Erfindung gemäß einem ersten Aspekt eine Kunststofffolie oder mehrlagiges Folienlaminat mit einer Oberfolie und zumindest einer Unterfolie oder zumindest einem polymerbasierten Schaum, wobei die Kunststofffolie oder die Oberfolie des mehrlagigen Folienlaminats aus einem thermoplastischem Elastomer der Blockcopolymerfamilie gebildet ist. Die Oberfolie des mehrlagigen Folienlaminats entspricht dabei in ihrer körperlichen Ausgestaltung der Kunststofffolie und unterscheidet sich von dieser im Wesentlichen nur dadurch, dass die Kunststofffolie in dem mehrlagigen Folienlaminat mit weiteren Schichten (d.h. eine Unterfolie, die in der Regel kompakt ausgebildet ist, oder einem polymerbasierten Schaum) flächig verbunden ist.

In der Folge sollen bevorzugte Ausgestaltungen der erfindungsgemäßen Kunststofffolie analog auch für entsprechende Oberfolien in einem erfindungsgemäßen mehrlagigen Folienlaminat gelten, auch wenn aus Erwägungen der Übersichtlichkeit explizit nur auf die Kunststofffolie eingegangen wird.

Thermoplastische Elastomere, die für die Herstellung der erfindungsgemäße Kunststofffolien herangezogen werden können, umfassen insbesondere thermoplastisches Polyurethan (TPE-U), thermoplastisches Elastomer auf Basis von Etheramid (TPE-A), thermoplastisches Elastomer auf Basis von Polystyrol (TPE-S), sowie thermoplastischer Copolyester (TPE-E). Besonders geeignet für die Herstellung der erfindungsgemäßen Kunststofffolien sind thermoplastisches Polyurethan (TPE-U), thermoplastisches Elastomer auf Basis von Etheramid (TPE-A) und thermoplastisches Elastomer auf Basis von Polystyrol (TPE-S). Ein ganz besonders geeignetes Material für die Herstellung der Kunststofffolien ist thermoplastisches Polyurethan. Mischungen der genannten Materialien können ebenfalls analog verwendet werden.

Verwendbare thermoplastisches Elastomere auf Basis von Polystyrol beinhalten insbesondere Triblockcopolymere von Styrol mit ABA-Struktur, wie Styrol-Butadien-Styrol und Styrol-Ethylen/Butylen-Styrol-Blockcopolymere.

Wie vorstehende bereits angedeutet ist es für die Kunststofffolie bevorzugt, wenn sie eine vergleichsweise weiche und üblichen Kunstledern nahekommende Haptik ausweist. Entsprechend ist es für das thermoplastische Elastomer in der Kunststofffolie oder Oberfolie bevorzugt, wenn es eine Shore A Härte im Bereich von 40 bis 90 und bevorzugt 50 bis 85 aufweist.

Neben dem thermoplastischen Elastomer der Blockcopolymerfamilie kann die erfindungsgemäße Kunststofffolie weitere Polymer und insbesondere weitere Elastomere enthalten, deren Anteil jedoch meist untergeordnet ist. Bevorzugt ist es erfindungsgemäß, wenn der Anteil der zusätzlichen Polymere bzw. Elastomere, bezogen auf die Gesamtmenge an Polymer in der Kunststofffolie bei 20 Gew.-% oder weniger und weiter bevorzugt bei 10 Gew.-% oder weniger liegt. Als Beispiel für ein Elastomer, dass neben dem thermoplastischen Elastomer der Blockcopolymerfamilie enthalten sein kann, können z.B. Polyolefinkautschuke genannt werden, die über die enthaltenen Doppelbindungen eine weitergehende Vernetzung unterstützen können, ohne dass hierzu niedermolekulare Verbindungen wie konventionelle Vernetzungshilfsmittel zugesetzt werden müssen. Als besonders geeigneter Polyolefinkautschuk kann hierzu z.B. Ethylen-Propylen-Dien-Kautschuk (EPDM) angegeben werden.

Die Kunststofffolie kann zur Vermittlung eines ansprechenden Aussehens, z.B. eine Narbe, die beim Betrachter den Eindruck der Hautseite eines Leders oder generell mit dem Aussehen eines Lederprodukts assoziiert wird, aufweisen, und es ist im Rahmen der vorliegenden Erfindung bevorzugt, wenn die erfindungsgemäße Kunststofffolie auf ihrer Oberfläche eine Narbung oder Oberflächenstruktur aufweist.

Im Allgemeinen kann eine Kunststofffolie aus einem thermoplastischen Elastomer der Blockcopolymerfamilie durch Extrudieren oder Kalandrieren oder hergestellt werden. Eine Kunststofffolie mit einer Oberflächenstruktur kann z.B. durch kalandrieren mit einer Walze, die eine Oberflächenstruktur gemäß dem Negativ der gewünschten Oberflächenstruktur auf der Folie aufweist, erzeugt werden. Eine andere Möglichkeit der Modifizierung der Kunststofffolie mit einer Narbe oder Oberflächenstruktur besteht in einem IMG Prozess, bei dem die Kunststofffolie in einem Verarbeitungsschritt tiefgezogen und mit einer Narbe bzw. Oberflächenstruktur versehen werden kann. Eine noch weitere Möglichkeit der Herstellung einer Folie besteht in einem Aufbringen von ausreichend fluidem thermoplastischem Elastomer auf einen Träger, der analog dem beschrieben Kalandrierprozess eine Oberflächenstruktur entsprechend dem Negativ der gewünschten Oberflächenstruktur aufweist, wobei indem das thermoplastische Elastomer anschließend unter Ausbildung der Kunststofffolie erkaltet.

Um bei einem Tiefziehen eine möglichst geringe Verformung einer zuvor auf die Kunststofffolie aufgebrachten Oberflächenstruktur zu realisieren, kann das darin enthaltene thermoplastische Elastomer vor dem Tiefziehen vernetzt werden Wobei in diesem Fall ein vergleichsweise geringer Vernetzungsgrad anzustreben ist, um die Tiefziehfähigkeit der Kunststofffolie nicht über Gebühr zu beeinträchtigen. Bei einem Aufbringen der Oberflächenstruktur im IMG Verfahren kann eine Vernetzung ebenfalls eine verbesserte Stabilität der aufgebrachten Oberflächenstruktur (z.B. Narbfestigkeit) und Beständigkeit gegenüber Verformen vermitteln. Erfolgt die Vernetzung Nach eine dreidimensionalen Verformung wie beim IMG Prozess, kann eine höhere Vernetzungsgrad eingestellt werden, da in diesem Fall die Folie nicht mehr weitergehend dreidimensional verformt wird. Ebenfalls ist es möglich, dass eine für ein Tiefziehen gering vernetzte Kunststofffolie nach dem tiefziehen zur Einstellung eines höheren Vernetzungsgrades weiter vernetzt wird.

Eine besonders günstige Form der Vernetzung stellt eine Strahlenvernetzung dar, bei der die Kunststofffolie mit elektromagnetischer Strahlung oder Elektronenstrahlen bestrahlt wird. Hier ist allerdings darauf zu achten, dass die Vernetzung ein günstiges Maß nicht übersteigt, da bei einer sehr hohen Vernetzung die gewünschte Verformbarkeit nicht mehr gegeben sein kann. Ein Maß für die Vernetzung stellt der Gelgehalt dar, der erfindungsgemäß durch Extraktion des Kunststoffs mit siedendem Toluol oder Dimethylformamid für 24h bestimmt wird, wobei der nach der Extraktion verbleibende kleinere feste Anteil, der bei der Extraktion mit Toluol oder Dimethylformamid erhalten wird, dem Gelgehalt entspricht. Bevorzugt wird im Rahmen der Vernetzung der Gelgehalt in der Kunststofffolie auf einen Anteil von 1 bis 90 Gew.-% und bevorzugt 2 bis 50 Gew.-% eingestellt, wobei hohe Vernetzungsanteile insbesondere bei Kunststofffolien realisiert werden können, die bereits in die gewünschte dreidimensionale Endform gebracht wurden Bei Kunststofffolien, die in der Folge noch einem Verformungsprozess unterzogen werden sollen, ist eine weniger starke Vernetzung, z.B. auf einen Gelgehalt im Bereich von 1 bis 20 Gew.-% und bevorzugt 2 bis 15 Gew.-%, bevorzugt.

Eine Strahlenvernetzung wird zweckmäßig durch Bestrahlen mit einer Dosis im Bereich von 10 bis 300 kGy und insbesondere 25 bis 150 kGy, bei mehrlagigen Folienlaminaten mit einer Bestrahlungsdosis von 20 bis 150 kGy und insbesondere 25 bis 100 kGy realisiert.

Eine Vernetzung führt auf der Molekülebene dazu, dass einzelne Polymermoleküle in der Kunststofffolie durch die Ausbildung von kovalenten Bindungen zwischen den Molekülen verbunden werden. Wenn die Vernetzung nicht durch Strahlung realisiert wird, kann diese alternativ auch chemisch initiiert werden, wobei in diesem Fall ein geeignetes chemisches Vernetzungsmittel in die Kunststofffolie einbezogen wird. Solche Vernetzungsmittel sind insbesondere Peroxidvernetzer, die bei (meist thermischer) Aktivierung Oxyradikale bilden. Diese Radikale reagieren anschließend unter H. Abstraktion mit dem Polymer unter Bildung von sekundären Radikalen, die entweder mit weiteren Radikalen unter Ausbildung von Vernetzungspunkten kombinieren oder mit im Polymer vorhandenen Doppelbindungen reagieren können. Bevorzugt als Peroxidvernetzer in die erfindungsgemäße Kunststofffolie einzubeziehende Peroxide sind z.B. 2,5-Bis(tert.-butylperoxy)-2,5-dimethylhexan oder tert-Butyl-peroxybenzoate.

Zur Unterstützung der Vernetzung kann die Kunststofffolie auch zusätzliche Vernetzungshilfsmittel enthalten, die meist in Form von chemischen Verbindungen mit einer oder bevorzugt mehreren Doppelbindungen eingesetzt werden. Solche Vernetzungshilfsmittel sind insbesondere ein- oder mehrfach ungesättigte Verbindungen wie polyfunktionelle Acrylate, z.B. in Form von Trimethylolpropantriacrylat, Methacrylaten von ein- oder mehrwertigen Alkoholen, z. B. Trimethylolpropantrimethacrylat, vinylfunktionellen Verbindungen, wie Styrol und Divinylbenzol, Allyl-Verbindungen, wie Triallylisocyanat, p-Chinondioxim, p,p'-Dibenzoylchinondioxim, N-Methyl-N,4-dinitrosoanilin, Nitrobenzol, Diphenylguanidin, oder Trimethylolpropan-N,N'-m-phenylendimaleimid. Besonders gute Ergebnisse werden bei Verwendung von Trimethylolpropantriacrylat, Trimethylolpropantrimethacrylat, Triallylcyanurat, Divinylbenzol, Ethylenglycoldimethacrylat, Diethylenglycoldimethacrylat und/oder Polyethylenglycoldimethacrylat erzielt. Die Vernetzungsmittel sollten in der für die Einstellung des gewünschten Vernetzungsgrads erforderlichen Menge in die Polymermasse einbezogen werden, wobei Mengen von 0,5 Gew.-% bis zu etwa 10 Gew.-%, bevorzugt von etwa 2 bis 5 Gew.-%, bezogen auf den Gehalt der Masse an thermoplastischen Elastomere der Blockcopolymerfamilie, einsetzt werden.

Für die Vernetzung von thermoplastischen Blockcopolymeren, die als solche bereits Doppeldindungen enthalten (wie beispielsweise Styrol-Butadien-Styrol), kann in den meisten Fällen auf den Zusatz von Vernetzungshilfsmittel verzichtet werden. In einer Ausführungsform enthält die Kunststofffolie daher Doppeldindungen enthaltende thermoplastische Blockcopolymeren und keine zusätzlichen Vernetzungshilfsmittel.

Neben diesen Bestandteilen kann die Kunststofffolie weitere Additive zur Eigenschaftssteuerung und -optimierung enthalten, wie insbesondere Pigmente oder Farbstoffe zur Farbgebung, Antioxidationsmittel, Lichtschutzmittel oder Alterungsschutzmitteln (zur Verbesserung der Alterungsstabilität), oder Gleitmittel (z.B. zur Verbesserung der Verarbeitungseigenschaften).

Antioxidantien für den Einsatz in den erfindungsgemäßen Kunststofffolien sind insbesondere Phenolderivate, Lactone und/oder Phosphite und als Lichtschutzmittel sterisch gehinderte Amine oder Benzotriazine,
Zur weiteren Optimierung der Oberflächenperformance oder -beständigkeit, Haptik oder optischen Eindrucks der Oberfläche der Kunststofffolie kann diese mit einer zusätzlichen Lackschicht versehen sein, bzw. eine solche Lackierung aufweisen. Bevorzugt als Lack ist dabei ein Polyurethan-basierter Lack oder einem Polyacrylatlack, wobei der Lack vernetzt oder unvernetzt sein kann. Bevorzugte Lacke zu Applizierung auf die erfindungsgemäße Kunststofffolie sind Wasserbasierte Lacke.

Auch die Rückseite der Kunststofffolie kann mit einer Beschichtung oder Lackierung modifiziert werden, z.B. zur Vermittlung von besserer Anhaftung von bei der weiteren Verarbeitung auch die Rückseite der Kunststofffolie aufgebrachten Kunststoffschaum oder Kunststoffschaumschichten.

Hinsichtlich der Dicke unterliegt die Kunststofffolie gemäß der vorliegenden Erfindung keinen relevanten Beschränkungen, mit der Maßgabe, dass die Dicke groß genug ist um der Folie die nötige Stabilität für eine weitere Verarbeitung zu vermitteln und nicht so groß ist, dass dies in Schwierigkeiten bei der weiteren Verarbeitung resultieren würde, wobei auch die Kosten, die bei dickeren Materialien stärker ins Gewicht fallen, zu beachten sind. Als günstige Dicke der Kunststoff- oder Oberfolie, mit der diesen Erwägungen Rechnung getragen wird, kann eine Dicke im Bereich von 0,02 bis 1,5 mm und insbesondere im Bereich von 0,1 bis 1,0 mm angegeben werden.

Die im vorstehenden Erwähnt kann ein mehrlagiges Folienlaminataus einer Oberfolie, die der beschriebenen Kunststofffolie entspricht, und einem polymerbasierten Schaum gebildet sein. Für einen solchen Schaum ist es bevorzugt, wenn er eine Dichte im Bereich von 35 bis 200 kg/m³ aufweist. Der Schaum kann z.B. auf Polyolefin oder Polyurethan (PU) basieren, wobei Polyurethan als Schaummaterial besonders bevorzugt ist.

Für eine Verbindung eines entsprechenden Schaums oder einer Unterfolie mit der erfindungsgemäßen Kunststofffolie kann der Fachmann auf an sich bekannte Verfahren zum Verbinden von Folien zurückgreifen, wie z.B. ein Verbinden durch Einbringen eines Klebstoffs oder einem Verbinden durch Aktivieren einer oder beider Folien durch z.B. oberflächliches Anschmelzen und anschließendes Zusammenpressen der Folien. Gegebenenfalls kann zur Vermittlung einer guten Anbindung auch ein Primer, z.B. auf Basis von Polyurethan, auf die Folie aufgebracht werden.

Wenn es sich bei dem erfindungsgemäßen Produkt um ein mehrlagiges Laminat handelt, ist eine Ausbildung des Laminats mit einem Textil in aller Regel nicht erforderlich, dass zudem die Herstellung des mehrlagigen Laminats komplexer machen und verteuern würde. Es ist daher bevorzugt, wenn ein solches Laminat keine Beschichtung mit einem Textil aufweist.

In einem weiteren Aspekt betrifft die vorliegende Erfindung ein Verfahren zur Herstellung einer Kunststofffolie oder eines mehrlagigen Folienlaminats, wie sie im vorstehenden beschrieben wurde, dass die folgenden Schritte umfasst:
(i) Bilden einer Masse, die ein thermoplastisches Elastomer der Blockcopolymerfamilie enthält,
(ii) Formen der Masse aus (i) zu einer Kunststofffolie, gegebenenfalls
(iii) Lackieren der Kunststofffolie, und gegebenenfalls
(iv) Verbinden der in (ii) hergestellten und gegebenenfalls in (iii) lackierten Kunststofffolie mit einer Unterfolie oder einem polymerbasierten Schaum, und
wobei die Folie im Anschluss an den Schritt (ii) oder nach dem optionalen Schritt (iii) oder (iv) zum Aufbringen einer Narbe oder Oberflächenstruktur geprägt wird.

Das Aufbringen der Narbe oder der Oberflächenstruktur erfolgt im Rahmen des Verfahrens bevorzugt über ein einen negativen Tiefziehprozesses oder In-Mould Grain Prozess.

Darüber hinaus ist es bevorzugt, wenn die mehrschichtige Kunststofffolie oder Oberfolie vor dem Behandeln in einem negativen Tiefzieh- oder In-Mould Grain Prozess vernetzt wird. In Bezug auf den im Rahmen einer solchen Vernetzung bevorzugt einzustellenden Gelgehalt gilt das im Zusammenhang mit der Einstellung des Gelgehlats in der Kunststofffolie ober erläuterte analog, d.h. bevorzugt ist der Gelgehalts im Bereich von 1 bis 20 Gew.-% einzustellen.

Ein weiterer Aspekt der vorliegenden Erfindung betrifft eine Bespannung für Innenraumteile eines Fahrzeugs, die aus einer Kunststofffolie oder einem mehrlagigen Folienlaminat, wie es vorstehend beschrieben wurde, gebildet ist. Wenn die Bespannung aus der Kunststofffolie gebildet ist, können sich zwischen der Kunststofffolie und einem Tragenden Teil des Innenraumteils noch weitere Schichten befinden, z.B. eine Schaum- oder Gewebeschicht, die nicht mit der Kunststofffolie verbunden ist. In diesem Fall kann eine feste Anbindung durch eine Verbindung der Kunststofffolie mit dem Tragenden Teil erreicht werden (bei der weitere Schichten zwischen Kunststofffolie und dem tragenden Teil fixiert werden), oder kann sich durch die dreidimensionale Form der Kunststofffolie selbst ergeben, durch die in Kombination mit dem tragenden Teil weitere Schichten zwischen der Kunststofffolie und tragendem Teil eingeklemmt werden.

Die Art des Fahrzeugs unterliegt keinen relevanten Beschränkungen, wobei Lastkraft- und Personenkraftwagen die geeignetsten Anwendungsgebiete darstellen. Es ist aber ebenso möglich, und im Rahmen der hier beschriebenen Erfindung, wenn es sich bei dem Innenraumteil um einen Innenraumteil eines Nutzfahrzeugs oder landwirtschaftlichen Fahrzeugs handelt, oder ein nicht im Fahrzeugbereich eingesetztes Innenraumteil, wie ein Innenraumteil eines Schiffs oder Flugzeugs.

Wegen der im Vergleich zu beispielsweise Kunststofffolien auf Basis thermoplastischer Elastomere auf Olefinbasis verbesserten Rückstell- und Hystereseeigenschaften ist es bevorzugt, wenn es sich bei der Bespannung um eine Bespannung einer Sitzgelegenheit, z.B. eines Stuhls, Sessels, Sitzes oder Sofas handelt, wobei eine Bespannung eines Fahrzeugsitzes als ganz besonders bevorzugt angegeben werden kann.

Ein noch weiterer Aspekt der vorliegenden Erfindung betrifft die Verwendung einer aus einem thermoplastischem Elastomer der Blockcopolymerfamilie gebildeten Kunststofffolie zur Vermittlung eines verbesserten Rückstellverhaltens der Form und/oder zur Unterdrückung von Faltenbildung in einem Fahrzeugsitz.

Durch die erfindungsgemäße Kunststofffolie lassen sich insbesondere die Folgenden Vorteile für eine Verarbeitung zu Sitzbespannungen und anderen Produkten realisieren:
- Die Kunststofffolie zeigt eines hohes Rückstellverhalten und ist zugleich über ein Tiefziehverfahren bearbeitbar.
- Die Kunststofffolie weist Eigenschaften und eine Performance auf, die die Folie für Anwendungen im Sitzbereich besonders geeignet macht.
- Aufgrund der Tiefziehfähigkeit der Kunststofffolie können Prozesse zur Herstellung von Sitzen wesentlich erleichtert werden.

Im Folgenden wird die Erfindung durch einige Beispiele noch näher erläutert, die jedoch nicht in irgendeiner Weise als beschränkend für den Schutzumfang der Anmeldung verstanden werden sollen.

### Beispiele:

Verschiedenen Polymerfolien gemäß den in der folgenden Tabelle 1 angegebenen Rezepturen wurden mittels eines üblichen Extrusionsverfahrens hergestellt. Zum Vergleich wurden Folien aus thermoplastischem Elastomer auf Olefinbasis (TPE-O) verwendet.

**Tabelle 1 :**

| Rezeptur | Beispiel 1 | Beispiel 2 | Beispiel 3 | Vergleichsbsp. |
|---|---|---|---|---|
| Aliphatisches TPU, Shore A 84 | 20 | 100 | | |
| Aliphatisches TPU, Shore A 64 | 80 | 0 | | |
| TPE-A, Shore A 82 | | | 100 | |
| TPE-O, Shore A 88 | | | | 100 |
| Farbpigment | 1 | 1 | 1 | 1 |

Die so erhaltenen Folien wurden auf ihre Eigenschaften, d.h. insbesondere die Rückstellkraft (Hysterese) de Abrieb, dass Dauerfaltverhalten und die Haptik untersucht. Die Rückstellkraft bei Raumtemperatur wurde bestimmt gemäß ISO 527-3 mit 10 Zyklen bis je 100% Dehnung mit anschließender Messung der bleibenden Dehnung in %. Das Dauerfaltverhalten wurde gemäß DIN EN ISO 32100 bei Raumtemperatur bestimmt, wobei die Zahl die Anzahl der Faltzyklen angibt und "iO" den Umstand bezeichnet, dass nach der Anzahl der Faltbeanspruchungen keine Beschädigung (Bewertung der Oberfläche gemäß DIN EN ISO 32100 mehr als 0) feststellbar war. Die Haptik wurde von einem dafür geschulten Prüfer durch Vergleich der Materialien bestimmt. Die Ergebnisse dieser Bestimmungen sind in der folgenden Tabelle 2 dargestellt:

**Tabelle 2:**

| Rezeptur | Beispiel 1 | Beispiel 2 | Beispiel 3 | Vergleichsbsp. |
|---|---|---|---|---|
| Rückstellkraft | 7 | 15 | 9 | 35 |
| Dauerfaltverhalten | 100.000 RT iO | 100.000 RT iO | 100.000 RT iO | 100.000 RT iO |
| Haptik (Weichheit, Griffgefühl, Rascheligkeit, Knacken) | ++ | + | + | - |

Tabelle 2 zeigt, dass für die erfindungsgemäßen Beispiele deutlich bessere Rückstellkräfte und eine bessere Haptik des Materials realisiert werden kann als bei Verwendung eines thermoplastischen Elastomers auf Olefinbasis (TPE-O). In allen Fällen konnte ein günstiges Dauerfaltverhalten beobachtet werden.

## Patentansprüche

1. Kunststofffolie oder mehrlagiges Folienlaminat mit einer Oberfolie und zumindest einer Unterfolie oder zumindest einem polymerbasierten Schaum, **dadurch gekennzeichnet, dass** die Kunststofffolie oder die Oberfolie des mehrlagigen Folienlaminats aus einem thermoplastischem Elastomer der Blockcopolymerfamilie gebildet ist.

2. Kunststofffolie oder mehrlagiges Folienlaminat gemäß Anspruch 1, **dadurch gekennzeichnet, dass** das thermoplastische Elastomer der Blockcopolymerfamilie ausgewählt ist aus thermoplastischem Polyurethan, thermoplastischem Elastomer auf Basis von Etheramid oder thermoplastischem Elastomer auf Basis von Polystyrol, insbesondere in Form von Styrol-Butadien-Styrol und Styrol-Ethylen/Butylen-Styrol-Blockcopolymeren, oder Mischungen davon.

3. Kunststofffolie oder mehrlagiges Folienlaminat gemäß Anspruch 1 oder 2, **dadurch gekennzeichnet, dass** das thermoplastische Elastomer in der Kunststofffolie oder Oberfolie eine Shore A Härte im Bereich von 40 bis 90 aufweist.

4. Kunststofffolie oder mehrlagiges Folienlaminat gemäß mindestens einem der Ansprüche 1 bis 3, **dadurch gekennzeichnet, dass** das thermoplastische Elastomer in der Oberfolie chemisch oder strahlenvernetzt ist, wobei der Gelgehalt des thermoplastischen Elastomers vorzugsweise 1 bis 20 Gew.-% und weiter bevorzugt 2 bis 15 Gew.-% beträgt.

5. Kunststofffolie oder mehrlagiges Folienlaminat gemäß mindestens einem der vorangehenden Ansprüche, **dadurch gekennzeichnet, dass** für die chemische Vernetzung der Kunststoff- oder der Oberfolie ein Peroxidvernetzer, bevorzugt in Form von 2,5-Bis(tert.-butylperoxy)-2,5-dimethylhexan oder tert-Butyl-peroxybenzoat in die Kunststoff- oder Oberfolie einbezogen wird.

6. Kunststofffolie oder mehrlagiges Folienlaminat gemäß mindestens einem der vorangehenden Ansprüche, **dadurch gekennzeichnet, dass** die Kunststoff- oder Oberfolie zusätzlich ein oder mehrere Additive, ausgewählt aus Pigmenten, Vernetzungshilfsmitteln, insbesondere in Form von polyfunktionellen Acrylaten, Antioxidationsmittel, Lichtschutzmitteln, Gleitmitteln und Alterungsschutzmitteln enthält.

7. Kunststofffolie oder mehrlagiges Folienlaminat gemäß mindestens einem der vorangehenden Ansprüche, **dadurch gekennzeichnet, dass** die Kunststoff- oder Oberfolie eine zusätzliche Lackierung aufweist, bevorzugt mit einem Polyurethan-basierten Lack oder einem Polyacrylatlack, wobei der Lack vernetzt oder unvernetzt sein kann.

8. Kunststofffolie oder mehrlagiges Folienlaminat gemäß mindestens einem der vorangehenden Ansprüche, **dadurch gekennzeichnet, dass** die Kunststoff- oder Oberfolie eine Narbung oder Oberflächenstrukturierung aufweist.

9. Kunststofffolie oder mehrlagiges Folienlaminat gemäß mindestens einem der vorangehenden Ansprüche, **dadurch gekennzeichnet, dass** die Kunststoff- oder Oberfolie eine Dicke im Bereich von 0,02 bis 1,5 mm und bevorzugt 0,1 bis 1,0 mm aufweist.

10. Mehrlagiges Folienlaminat gemäß Anspruch 1, das auf seiner Rückseite keine Beschichtung mit einem Textil aufweist.

11. Verfahren zur Herstellung einer Kunststofffolie oder eines mehrlagigen Folienlaminats gemäß mindestens einem der vorangehenden Ansprüche, umfassend die Schritte:
(i) Bilden einer Masse, die ein thermoplastisches Elastomer der Blockcopolymerfamilie enthält,
(ii) Formen der Masse aus (i) zu einer Kunststofffolie, gegebenenfalls
(iii) Lackieren der Kunststofffolie, und gegebenenfalls
(iv) Verbinden der in (ii) hergestellten und gegebenenfalls in (iii) lackierten Kunststofffolie mit einer Unterfolie oder einem polymerbasierten Schaum,
wobei die Folie im Anschluss an den Schritt (ii) oder nach dem optionalen Schritt (iii) oder (iv) zum Aufbringen einer Narbe oder Oberflächenstruktur geprägt wird.

12. Verfahren nach Anspruch 11, wobei das Aufbringen einer Narbe oder Oberflächenstruktur im Rahmen eines In-Mould Grain Prozesses erfolgt.

13. Verfahren nach Anspruch 12, wobei die mehrschichtige Kunststofffolie vor dem Behandeln in einem negativen Tiefzieh- oder In-Mould Grain Prozess vernetzt wird, bevorzugt unter Einstellung eines Gelgehalts im Bereich von 1 bis 90 Gew.-% und bevorzugt 1 bis 50 Gew.-%.

14. Bespannung für Innenraumteile eines Fahrzeugs, insbesondere eines Lastkraft- oder Personenkraftwagens, wobei die Bespannung aus einer Kunststofffolie oder einem mehrlagigen Folienlaminat gemäß mindestens einem der Ansprüche 1 bis 10 gebildet ist.

15. Bespannung nach Anspruch 14, wobei die Bespannung als Bespannung eines Fahrzeugsitzes ausgebildet ist.

16. Verwendung einer aus einem thermoplastischem Elastomer der Blockcopolymerfamilie gebildeten Kunststofffolie zur Vermittlung eines verbesserten Rückstellverhaltens der Form und/oder zur Unterdrückung von Faltenbildung in einem Fahrzeugsitz.
